# EUROPEAN PATENT APPLICATION

(11) **EP 4 629 091 A1**
(43) Date of publication of application: **08.10.2025**
(21) Application number: 24838477.8
(22) Date of filing: 29.05.2024
(51) Int. Cl.: G06F 13/38, G06F 13/40, G06F 13/42, G06F 15/78, H04L 41/044

(54) **DATA TRANSMISSION METHOD, DATA LINK LAYER, CHIP INTERCONNECTION INTERFACE, AND ELECTRONIC DEVICE**

(30) Priority: 12.07.2023 CN 202310854219
(71) Applicant: Hygon Information Technology Co., Ltd., Binhai New Area, Tianjin 300392 (CN)
(72) Inventor: XU, Chao, Tianjin 300392 (CN); ZHAO, Fenghai, Tianjin 300392 (CN); ZHOU, Peng, Tianjin 300392 (CN)
(74) Representative: Maiwald GmbH
(86) International application number: PCT/CN2024/096016
(87) International publication number: WO 2025/011219

(57) **Abstract**

Embodiments of the present invention are a data transmission method, a data link layer, a chip interconnection interface, and an electronic device. The data transmission method is applied to a data link layer of a chiplet interconnection interface; the data link layer communicates with a system bus and a physical layer; the system bus works in a first clock domain; and the physical layer works in a second clock domain or works in the second clock domain and a third clock domain. The method comprises: a data link layer packs first data received from a system bus, so as to obtain second data, and provides the second data to a physical layer, or the data link layer unpacks third data received from the physical layer, so as to obtain fourth data, and provides the fourth data to the system bus, wherein part of the data link layer works in a third clock domain, a first clock domain is different from a second clock domain and the third clock domain, the first clock domain comprises a first clock signal, the second clock domain comprises a second clock signal, and the third clock domain comprises a third clock signal.

## Description

This application claims the priority of Chinese Patent Application No. 202310854219.7 filed on July 12, 2023, the disclosure of which is incorporated by reference herein in its entirety as part of the present application.

### TECHNICAL FIELD

Embodiments of the present disclosure relate to a data transmission method, a data link layer, a chiplet interconnection interface, a chip, and an electronic device.

### BACKGROUND

A chiplet is a cell chip having certain functionality and including an interconnection interface in package, which is a recent development of the chip design technology. Chiplet technology is intended to realize a chip design using a plurality of chiplets. Not only can the cost be reduced, but also the performance of the chip can be improved.

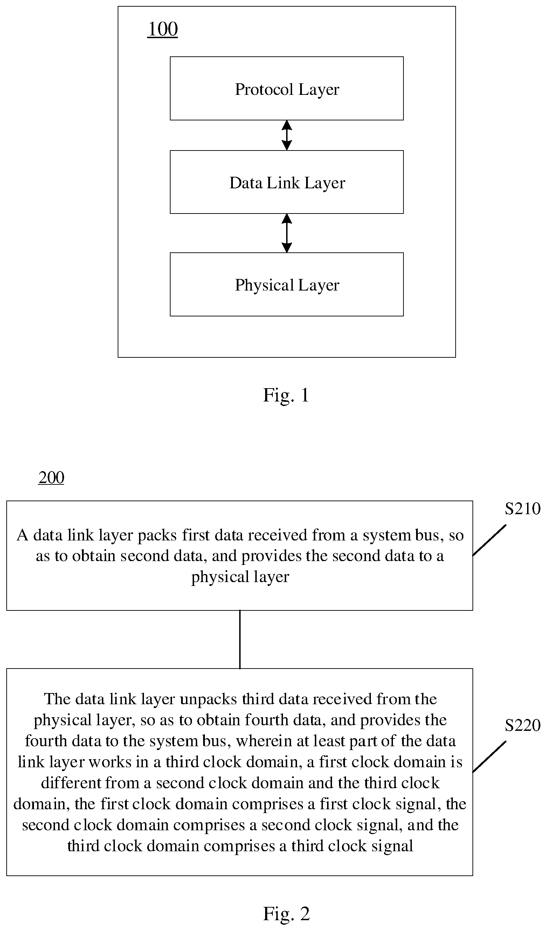

Fig. 1 illustrates a framework of a chiplet interconnection interface in a technology. In Fig. 1, a chiplet 100 includes a protocol layer, a data link layer, and a physical layer. The protocol layer relates to a type of a specific service carried, and supports a system on chip (SOC) bus protocol, a high bandwidth storage service, a custom protocol, etc. The data link layer provides reliable data transmission for both parties of communication. The physical layer provides a bitstream transmission service conforming to physical channel characteristics for both parties of communication. The data link layer realizes data transmission between the physical layer and the protocol layer.

### SUMMARY

In a first aspect, at least one embodiment of the present disclosure provides a data transmission method applied to a data link layer of a chiplet interconnection interface, wherein the data link layer communicates with a system bus and a physical layer, wherein the system bus operates in a first clock domain, and the physical layer operates in a second clock domain or operates in both the second clock domain and a third clock domain. The data transmission method includes: performing, by the data link layer, packing processing on first data received from the system bus to acquire second data and providing the second data to the physical layer, or performing, by the data link layer, unpacking processing on third data received from the physical layer to acquire fourth data, and providing the fourth data to the system bus, wherein the data link layer partly operates in the third clock domain, the first clock domain and the second clock domain are both different from the third clock domain, the first clock domain includes a first clock signal, the second clock domain includes a second clock signal, and the third clock domain includes a third clock signal.

For example, in the data transmission method provided by at least one embodiment of the present disclosure, before performing, by the data link layer, the packing processing on the first data received from the system bus to acquire the second data, the method further includes: asynchronously receiving, by the data link layer, the first data from the system bus, according to the third clock signal, wherein the first data is transmitted by the system bus according to the first clock signal.

For example, in the data transmission method provided by at least one embodiment of the present disclosure, before performing, by the data link layer, the unpacking processing on the third data received from the physical layer to acquire the fourth data, the method further includes: acquiring, by the data link layer, the third data from the physical layer according to the third clock signal; or acquiring, by the data link layer, the third data from the physical layer according to the first clock signal in response to the data link layer further partly operating in the first clock domain; or acquiring, by the data link layer, the third data from the physical layer according to the second clock signal in response to the data link layer further partly operating in the second clock domain, wherein the third data is transmitted by the physical layer according to the second clock signal.

For example, in the data transmission method provided by at least one embodiment of the present disclosure, performing, by the data link layer, the packing processing on the first data received from the system bus to acquire the second data includes: performing, by the data link layer, the packing processing on the first data according to the third clock signal to acquire the second data.

For example, in the data transmission method provided by at least one embodiment of the present disclosure, providing the second data to the physical layer includes: synchronously or asynchronously providing, by the data link layer, the second data to the physical layer according to the third clock signal.

For example, in the data transmission method provided by at least one embodiment of the present disclosure, performing, by the data link layer, the unpacking processing on third data received from the physical layer to acquire the fourth data includes: when the data link layer acquires the third data according to the first clock signal, performing, by the data link layer, the unpacking processing on the third data according to the first clock signal to acquire the fourth data; and when the data link layer acquires the third data according to the third clock signal, performing, by the data link layer, the unpacking processing on the third data according to the third clock signal to acquire the fourth data.

For example, in the data transmission method provided by at least one embodiment of the present disclosure, acquiring, by the data link layer, the third data from the physical layer according to the third clock signal includes: asynchronously receiving, by the data link layer, the third data from the physical layer, according to the third clock signal; or acquiring, by the data link layer, the third data from the physical layer according to the first clock signal includes: asynchronously receiving, by the data link layer, the third data from the physical layer, according to the first clock signal; or acquiring, by the data link layer, the third data from the physical layer according to the second clock signal includes: synchronously receiving, by the data link layer, the third data from the physical layer, according to the second clock signal.

For example, in the data transmission method provided by at least one embodiment of the present disclosure, receiving, by the data link layer, the third data from the physical layer, according to the second clock signal includes: determining and receiving, by the data link layer, a plurality of data segments of the third data from a data signal transmitted by the physical layer according to the second clock signal, wherein the third data consists of the plurality of data segments.

For example, in the data transmission method provided by at least one embodiment of the present disclosure, before receiving the plurality of data segments, the method further includes: asynchronously acquiring, by the data link layer, the plurality of data segments according to the first clock signal, or asynchronously acquiring, by the data link layer, the plurality of data segments according to the third clock signal, to enable the third data to enter the first clock domain or the third clock domain.

For example, in the data transmission method provided by at least one embodiment of the present disclosure, asynchronously receiving, by the data link layer, the third data from the physical layer, according to the first clock signal includes: asynchronously receiving, by the data link layer, a plurality of data segments of the third data according to the first clock signal; or asynchronously receiving, by the data link layer, the third data from the physical layer, according to the third clock signal includes: asynchronously receiving, by the data link layer, a plurality of data segments of the third data according to the third clock signal; wherein the third data consists of the plurality of data segments.

For example, in the data transmission method provided by at least one embodiment of the present disclosure, providing the fourth data to the system bus includes: synchronously providing, by the data link layer, the fourth data to the system bus according to the first clock signal; or asynchronously providing, by the data link layer, the fourth data to the system bus according to the third clock signal.

For example, in the data transmission method provided by at least one embodiment of the present disclosure, the method further includes: performing, by the data link layer, a loopback test on a plurality of data paths corresponding to the data link layer according to the third clock signal, wherein the plurality of data paths are connected to the data link layer via the physical layer.

For example, in the data transmission method provided by at least one embodiment of the present disclosure, performing, by the data link layer, the loopback test on the plurality of data paths corresponding to the data link layer according to the third clock signal includes: generating, by the data link layer, at least one piece of test data according to a preset loopback test data pattern; synchronously or asynchronously transmitting, by the data link layer, the at least one piece of test data to the physical layer according to the third clock signal for transmitting to the plurality of data paths; acquiring, by the data link layer, at least one piece of test return data from the physical layer, according to the first clock signal, the second clock signal, or the third clock signal, the at least one piece of test return data corresponds to the at least one piece of test data one by one; and detecting, by the data link layer, the at least one piece of test return data according to the loopback test data pattern to complete the loopback test.

In a second aspect, at least one embodiment of the present disclosure further provides a data link layer applied to a chip interconnection interface, wherein the data link layer communicates with a system bus and a physical layer, the system bus operates in a first clock domain, the physical layer operates in a second clock domain or operates in both the second clock domain and a third clock domain, and the data link layer partly operates in the third clock domain, the data link layer includes: a system bus interface connected with the system bus and configured to receive first data from the system bus; a packing module connected with the system bus interface and configured to perform packing processing on the first data to acquire second data; a physical layer interface connected with the packing module and the physical layer and configured to provide the second data to the physical layer and acquire third data from the physical layer; an unpacking module connected with the physical layer interface and configured to perform unpacking processing on the third data to acquire fourth data, the fourth data being provided by the unpacking module or by the system bus interface to the system bus; and a local clock connected with the system bus interface, the packing module, the unpacking module, and the physical layer interface, and configured to generate a third clock signal included in the third clock domain; wherein the first clock domain, the second clock domain, and the third clock domain are different, the first clock domain includes a first clock signal, and the second clock domain includes a second clock signal.

For example, in the data link layer provided by at least one embodiment of the present disclosure, the system bus interface is configured to asynchronously receive the first data from the system bus according to the third clock signal, wherein the first data is transmitted by the system bus according to the first clock signal.

For example, in the data link layer provided by at least one embodiment of the present disclosure, the physical layer interface is further configured to acquire the third data from the physical layer according to the third clock signal; or the physical layer interface is further configured to acquire the third data from the physical layer according to the first clock signal in response to the data link layer further partly operating in the first clock domain; or the physical layer interface is further configured to acquire the third data from the physical layer according to the second clock signal in response to the data link layer further partly operating in the second clock domain; wherein the third data is transmitted by the physical layer according to the second clock signal.

For example, in the data link layer provided by at least one embodiment of the present disclosure, the packing module is configured to perform the packing processing on the first data according to the third clock signal to acquire the second data.

For example, in the data link layer provided by at least one embodiment of the present disclosure, the physical layer interface is configured to synchronously or asynchronously provide the second data to the physical layer according to the third clock signal.

For example, in the data link layer provided by at least one embodiment of the present disclosure, the unpacking module is configured to: when the third data is acquired according to the first clock signal, perform the unpacking processing on the third data according to the first clock signal to acquire the fourth data; and when the third data is acquired according to the third clock signal, perform the unpacking processing on the third data according to the third clock signal to acquire the fourth data.

For example, in the data link layer provided by at least one embodiment of the present disclosure, the physical layer interface is configured to: asynchronously receive the third data from the physical layer according to the first clock signal; or asynchronously receive the third data from the physical layer according to the third clock signal; or synchronously receive the third data from the physical layer according to the second clock signal.

For example, in the data link layer provided by at least one embodiment of the present disclosure, the physical layer interface is further configured to: determine and receive a plurality of data segments of the third data from a data signal transmitted by the physical layer according to the second clock signal, wherein the third data consists of the plurality of data segments.

For example, in the data link layer provided by at least one embodiment of the present disclosure, the physical layer interface is further configured to: after receiving the plurality of data segments, asynchronously acquire the plurality of data segments according to the first clock signal, or asynchronously acquire the plurality of data segments according to the third clock signal, to enable the third data to enter the first clock domain or the third clock domain.

For example, in the data link layer provided by at least one embodiment of the present disclosure, the physical layer interface is configured to: asynchronously receive a plurality of data segments of the third data according to the first clock signal, or asynchronously receive a plurality of data segments of the third data according to the third clock signal, wherein the third data consists of the plurality of data segments.

For example, in the data link layer provided by at least one embodiment of the present disclosure, the unpacking module or the system bus interface is further configured to: synchronously provide the fourth data to the system bus according to the first clock signal; or asynchronously provide the fourth data to the system bus according to the third clock signal.

For example, in the data link layer provided by at least one embodiment of the present disclosure, the data link layer further including a first buffer memory connected with the system bus interface or the packing module and configured to store the first data according to the third clock signal.

For example, in the data link layer provided by at least one embodiment of the present disclosure, the data link layer further partly operates in the first clock domain and the second clock domain, or the data link layer further partly operates in the second clock domain, wherein the physical layer interface includes a second buffer memory connected with the physical layer and the unpacking module and configured to perform a write operation according to the second clock signal and perform a read operation according to the first clock signal or the third clock signal, wherein the second buffer memory stores the third data in the form of data segments.

For example, in the data link layer provided by at least one embodiment of the present disclosure, the data link layer further includes: a data detection module connected with the unpacking module and the second buffer memory and configured to: detect data segments in the second buffer memory; when a plurality of data segments constituting the third data are detected, transmit the plurality of data segments to the unpacking module; and when the plurality of data segments constituting the third data are not detected, adjust the second buffer memory to acquire the plurality of data segments.

For example, in the data link layer provided by at least one embodiment of the present disclosure, the data link layer further includes: a loopback test module connected with the physical layer interface and the packing module and configured to perform a loopback test on a plurality of data paths corresponding to the data link layer according to the third clock signal, wherein the plurality of data paths are connected to the data link layer via the physical layer.

For example, in the data link layer provided by at least one embodiment of the present disclosure, the loopback test module includes a loopback test generator connected with the packing module and a loopback test checker connected with the physical layer interface, wherein, the loopback test generator is configured to generate at least one piece of test data according to a preset loopback test data pattern, and provide the at least one piece of test data to the physical layer via the packing module and the physical layer interface according to the third clock signal, for transmitting to the plurality of data paths; and the loopback test checker is configured to: receive at least one piece of test return data from the physical layer via the physical layer interface according to the third clock signal, the at least one piece of test return data corresponds to the at least one piece of test data one by one; and detect the at least one piece of test return data according to the loopback test data pattern to complete the loopback test.

For example, in the data link layer provided by at least one embodiment of the present disclosure, the system bus interface is implemented with an asynchronous first input first output (FIFO) memory.

For example, in the data link layer provided by at least one embodiment of the present disclosure, the second buffer memory is an asynchronous elastic FIFO memory.

In a third aspect, at least one embodiment of the present disclosure further provides a chiplet interconnection interface configured to perform the data transmission method as described in the first aspect.

In a fourth aspect, at least one embodiment of the present disclosure further provides a chiplet interconnection interface, including the data link layer as described in the second aspect.

In a fifth aspect, at least one embodiment of the present disclosure further provides a chip, including a plurality of chiplets, wherein any two chiplets of the plurality of chiplets are connected through the chiplet interconnection interface of the fourth aspect.

In a sixth aspect, at least one embodiment of the present disclosure further provides an electronic device, including the chip of the fifth aspect.

### BRIEF DESCRIPTION OF DRAWINGS

To describe the technical solutions of the embodiments of the present disclosure more clearly, the accompanying drawings for the embodiments will be introduced below briefly. Apparently, the accompanying drawings in the following description merely involve some embodiments of the present disclosure and are not limiting of the present disclosure.
Fig. 1 illustrates a framework of a chiplet interconnection interface in a technology;
Fig. 2 illustrates a flowchart of a data transmission method provided according to at least one embodiment of the present disclosure;
Figs. 3a to 3d illustrate structural schematic diagrams of a data link layer provided according to at least one embodiment of the present disclosure;
Figs. 4a and 4b illustrate structural schematic diagrams of a data link layer provided according to at least one embodiment of the present disclosure;
Fig. 5 illustrates another structural schematic diagram of a data link layer provided according to at least one embodiment of the present disclosure;
Fig. 6 illustrates a schematic diagram of a chip provided by at least one embodiment of the present disclosure; and
Fig. 7 illustrates a schematic diagram of an electronic device provided by at least one embodiment of the present disclosure.

### DETAILED DESCRIPTION

To make the objective, technical solutions, and advantages of the embodiments of the present disclosure clearer, the technical solutions of the embodiments of the present disclosure will be described below clearly and completely with reference to the accompanying drawings in the embodiments of the present disclosure. Apparently, the described embodiments are some rather than all of the embodiments of the present disclosure. All other embodiments derived from the described embodiments of the present disclosure by those of ordinary skill in the art without creative efforts shall fall within the protection scope of the present disclosure.

Unless otherwise defined, the technical or scientific terms used herein should have the usual meanings understood by those of ordinary skill in the field to which the present disclosure belongs. Terms such as "first" and "second" used herein do not denote any order, quantity or importance, but are merely intended to distinguish between different constituents. Similarly, the terms "one", "a", and "the", and similar words are not meant to be limiting, but rather denote the presence of at least one. "Containing", "including", and similar words mean that elements or articles appearing before "containing" or "including" cover the elements or articles and their equivalent elements appearing behind "containing" or "including", not excluding any other elements or articles. Terms such as "connected to" and "connected with" are not restricted to physical or mechanical connections, but may also include electrical connections, whether direct or indirect. "Upper", "lower", "left", "right", and the like are used only to indicate a relative positional relationship, and when the absolute position of the described object is changed, the relative positional relationship is also changed accordingly.

A physical layer includes a data transmitting path, a data receiving path, and a side band path. The number of paths in the data transmitting path is greater than or equal to 1, the number of paths in the data receiving path is greater than or equal to 1, and the number of paths in the side band path is typically 1. One end of the physical layer is connected to a data link layer, and the other end of the physical layer is connected to the outside, e.g., connected to a physical layer of another chiplet. The data transmitting path, the data receiving path, and the side band path may serve as one path set Macro. Optionally, the physical layer may include a plurality of path sets, such as 8 and 16 path sets.

There may be a plurality of connection manners for the data link layer and the physical layer. For example, when a service bandwidth that the data link layer needs to manage is less than a bandwidth of a single path set, the data link layer may be divided into a plurality of links that share the single path set for transmission. The bandwidth of each link may be greater than the bandwidth of a single data path, or may be less than the bandwidth of the single data path. The single data path includes one data transmitting path and one data receiving path.

For another example, when bandwidth requirement of a single link goes beyond the bandwidth of a single path set, a plurality of path sets may be connected to realize a greater bandwidth. For example, each link is connected to 1 to 8 path sets. Each link may also be connected to more than 8 path sets, and the number of the connected path sets is determined according to an actual requirement. It may be appreciated that a plurality of path sets still belong to the same physical layer, and the data link layer is in one-to-one correspondence with the physical layer.

The data link layer may realize a plurality of functions, including transmission error detection and error correcting mechanism, link state and low power state switching management, transmission message format definition, and binding of a plurality of data channels. The transmission error detection and error correcting mechanism includes the generation and checking of cyclic redundancy check (CRC), data retransmission, and error checking and correcting (ECC).

The data link layer realizes data transmission between a protocol layer and the physical layer. The data link layer is typically directly connected to the physical layer. The data link layer is connected to the protocol layer through the system bus. The system bus typically has a bus clock, and the physical layer has a local clock. Thus, the data link layer needs to harmonize data transmission between different clocks. An existing method is to limit the clock of the system bus and the clock of the physical layer. For example, a clock frequency of the system bus is related to a clock frequency of the physical layer and a crosstalk ratio of the physical layer. As a result, clock signals of the physical layer and the system bus cannot be matched highly, thereby affecting data transmission efficiency and stability. Moreover, in order to realize data transmission, the frequency of the clock signal of the system bus is constrained by the clock signal of the physical layer, thereby limiting the setting of the clock frequency of the system bus and restraining the chiplet design.

On this basis, the present disclosure provides a data transmission method, a data link layer, a chiplet interconnection interface, and an electronic device to solve the above problems.

At least one embodiment of the present disclosure a data transmission method applied to a data link layer of a chiplet interconnection interface, wherein the data link layer communicates with a system bus and a physical layer, wherein the system bus operates in a first clock domain, and the physical layer operates in a second clock domain or operates in both the second clock domain and a third clock domain. The data transmission method includes: performing, by the data link layer, packing processing on first data received from the system bus to acquire second data and providing the second data to the physical layer, or performing, by the data link layer, unpacking processing on third data received from the physical layer to acquire fourth data, and providing the fourth data to the system bus, wherein the data link layer partly operates in the third clock domain, the first clock domain and the second clock domain are both different from the third clock domain, the first clock domain includes a first clock signal, the second clock domain includes a second clock signal, and the third clock domain includes a third clock signal.

At least one embodiment of the present disclosure further provides a data link layer applied to a chip interconnection interface, wherein the data link layer communicates with a system bus and a physical layer, the system bus operates in a first clock domain, the physical layer operates in a second clock domain or operates both in the second clock domain and a third clock domain, and the data link layer partly operates in the third clock domain, the data link layer includes: a system bus interface connected with the system bus and configured to receive first data from the system bus; a packing module connected with the system bus interface and configured to perform packing processing on the first data to acquire second data; a physical layer interface connected with the packing module and the physical layer and configured to provide the second data to the physical layer and acquire third data from the physical layer; an unpacking module connected with the physical layer interface and configured to perform unpacking processing on the third data to acquire fourth data, the fourth data being provided by the unpacking module or by the system bus interface to the system bus; and a local clock connected with the system bus interface, the packing module, the unpacking module, and the physical layer interface, and configured to generate a third clock signal included in the third clock domain; wherein the first clock domain, the second clock domain, and the third clock domain are different, the first clock domain includes a first clock signal, and the second clock domain includes a second clock signal.

At least one embodiment of the present disclosure further provides a chiplet interconnection interface, including the data link layer as described above.

At least one embodiment of the present disclosure further provides a chip, including a plurality of chiplets, wherein any two chiplets of the plurality of chiplets are connected through the chiplet interconnection interface as described above.

At least one embodiment of the present disclosure provides an electronic device, including the above-mentioned chip.

Fig. 2 illustrates a flowchart of a data transmission method provided according to an embodiment of the present disclosure.

The data transmission method 200 is applied to a data link layer of a chiplet interconnection interface. The data transmission method 200 includes the following steps.

Step S210, a data link layer performs packing processing on first data received from a system bus to acquire second data and provides the second data to a physical layer.

Step S220, the data link layer performs unpacking processing on third data received from the physical layer to acquire fourth data and provides the fourth data to the system bus. The data link layer partly operates in the third clock domain, and the first clock domain and the second clock domain are both different from the third clock domain; the first clock domain includes a first clock signal, the second clock domain includes a second clock signal, and the third clock domain includes a third clock signal.

In this embodiment, the data link layer communicates with the system bus and the physical layer. The system bus operates in the first clock domain, and the physical layer operates in the second clock domain or the physical layer operates in both the second clock domain and the third clock domain, while the data link layer partly operates in the third clock domain. For example, a part of the data link layer operates in the third clock domain, a part thereof operates in the second clock domain, and a further another part thereof operates in the first clock domain. The first clock domain of the system bus and the second clock domain of the physical layer are separated by the third clock domain of the data link layer. The problem that clock signals of the physical layer and the system bus cannot be highly matched to affect data transmission efficiency and stability can be solved, and the problem that the frequency of the clock signal of the system bus is constrained by the clock signal of the physical layer can also be solved. Thus, the data transmission efficiency can be improved, the frequency bottleneck of the clock of the system bus is eliminated, a plurality of system bus clocks are supported, and the flexibility of the implementation manner of a chiplet can be improved.

In this embodiment, the data link layer is responsible for data transmission between the system bus and the physical layer. The data link layer needs to perform data interaction with the system bus and also needs to perform data interaction with the physical layer. These data interaction processes cannot completely avoid switching of clock domains. Thus, the data link layer cannot completely operate in the third clock domain. Assuming that these data interaction processes are excluded beyond the data link layer, the data link layer may operate only in the third clock domain.

In this embodiment, step S210 and step S220 are not joined by an arrowed line segment because step S210 and step S220 are not limited to a particular order, and these two steps may be performed simultaneously. For example, the data transmission from the system bus to the physical layer and the data transmission from the physical layer to the system bus may be carried out simultaneously.

Before performing step S210, the data transmission method further includes: asynchronously receiving, by the data link layer, the first data from the system bus, according to the third clock signal, wherein the first data is transmitted by the system bus according to the first clock signal.

For example, the data link layer may asynchronously receive the first data according to the third clock signal. The first data is carried by a data signal which is synchronized with the first clock signal. The first data is asynchronously received by the data link layer, and segregation of the clock signals of the system bus and the physical layer is realized.

Before performing step S210, the data link layer performs the packing processing on the first data according to the third clock signal to acquire the second data. For the way of performing the packing processing on the first data, a reference may be made to the related description of Fig. 2.

When the physical layer operates only in the second clock domain, the data link layer asynchronously transmits the second data to the physical layer according to the third clock signal. When the physical layer operates in both the second clock domain and the third clock domain, the data link layer may synchronously provide the second data to the physical layer according to the third clock signal. For example, the data link layer uses a data signal synchronized with the third clock signal to carry the second data. The physical layer uses the second clock signal to receive the second data.

In some embodiments, the physical layer may not use the third clock signal. For example, the physical layer only belongs to the second clock domain, the third clock signal and the second clock signal are asynchronized, and the third clock signal is used to transmit the second data, while the second clock signal is used to receive the second data. This is asynchronized data transmission.

Before performing step S220, the data transmission method further includes: acquiring, by the data link layer, the third data from the physical layer according to the third clock signal; or acquiring, by the data link layer, the third data from the physical layer according to the first clock signal in response to the data link layer further partly operating in the first clock domain; or acquiring, by the data link layer, the third data from the physical layer according to the second clock signal in response to the data link layer further partly operating in the second clock domain, wherein the third data is transmitted by the physical layer according to the second clock signal.

In embodiments of the present disclosure, the data link layer may operate in a plurality of clock domains. For example, the data link layer partly operates in the third clock domain and partly operates in the first clock domain, or the data link layer partly operates in the third clock domain and partly operates in the second clock domain, or the data link layer partly operates in the third clock domain, partly operates in the first clock domain, and partly operates in the second clock domain. The data link layer "according to" or "using" the first clock signal represents the data link layer partly operating in the first clock domain, and the data link layer "according to" or "using" the second clock signal represents the data link layer partly operating in the second clock domain.

In this embodiment, when the data link layer acquires the third data from the physical layer, the third data may be received synchronously, or the third data may be received asynchronously, etc. That is, the operation of "acquiring" the third data in this embodiment is not equivalent to a single operation of "synchronously receiving" or "asynchronously receiving" the third data.

For example, the data link layer asynchronously receives the third data from the physical layer according to the first clock signal, or the data link layer asynchronously receives the third data from the physical layer according to the third clock signal. For another example, the data link layer synchronously receives the third data from the physical layer according to the second clock signal.

Optionally, when the data link layer receives the third data according to the second clock signal, a plurality of data segments of the third data may be determined and received from a data signal transmitted by the physical layer according to the second clock signal, wherein the third data consists of the plurality of data segments.

For example, the physical layer transmits the data signal according to the second clock signal. Then, the data signal is synchronized with the second clock signal. Thus, the data link layer may receive the third data according to the second clock signal. The data signal carries the plurality of data segments constituting the third data. Thus, a location of a data segment in the data signal needs to be determined so that the data segments can be accurately received.

After the plurality of data segments are received, the plurality of data segments (i.e., the third data) at this time further belongs to the second clock domain. The data link layer may asynchronously acquire the plurality of data segments according to the first clock signal or the third clock signal, such that the third data correspondingly enters the first clock domain or the third clock domain. For example, after the plurality of data segments are received, these data segments are temporarily stored in a memory, and then the plurality of data segments are read from the memory according to the first clock signal or the third clock signal.

Optionally, when the data link layer asynchronously receives the third data according to the first clock signal, the data link layer may asynchronously receive the plurality of data segments of the third data according to the first clock signal, wherein the third data consists of the plurality of data segments. When the data link layer asynchronously receives the third data according to the third clock signal, the data link layer may asynchronously receive the plurality of data segments of the third data according to the third clock signal.

When step S320 is performed, the data link layer performs the unpacking processing on the third data. For example, payloads in a plurality of pieces of Flit data are combined into the fourth data that meets a transmission requirement of the system bus or a format of an upper layer protocol. For example, the data link layer performs the unpacking processing on the third data according to the first clock signal or the third clock signal.

In this embodiment, if the data link layer receives the third data according to the first clock signal, then the first clock signal is used in subsequent operations. If the data link layer receives the third data according to the third clock signal, then the third clock signal is used in subsequent operations. For example, when the data link layer receives the third data according to the first clock signal, the data link layer performs the unpacking processing on the third data according to the first clock signal to acquire the fourth data. When the data link layer receives the third data according to the third clock signal, the data link layer performs the unpacking processing on the third data according to the third clock signal to acquire the fourth data.

When step S220 is performed, the data link layer further synchronously provides the fourth data to the system bus according to the first clock signal, or the data link layer further asynchronously provides the fourth data to the system bus according to the third clock signal.

In some embodiments, the data transmission method further includes: performing, by the data link layer, a loopback test on a plurality of data paths corresponding to the data link layer according to the third clock signal, wherein the plurality of data paths are connected to the data link layer via the physical layer.

In this embodiment, the data link layer needs to complete the loopback test according to the third clock signal. The loopback test is a closed-loop test, starting from the data link layer and ending at the data link layer.

For example, performing, by the data link layer, the loopback test on the plurality of data paths corresponding to the data link layer according to the third clock signal includes: generating, by the data link layer, at least one piece of test data according to a preset loopback test data pattern; synchronously or asynchronously transmitting, by the data link layer, the at least one piece of test data to the physical layer according to the third clock signal for transmitting to the plurality of data paths; acquiring, by the data link layer, at least one piece of test return data from the physical layer according to the first clock signal, the second clock signal, or the third clock signal, wherein the at least one piece of test return data being in one-to-one correspondence with the at least one piece of test data; and detecting, by the data link layer, the at least one piece of test return data according to the preset loopback test data pattern to complete the loopback test.

In this embodiment, the plurality of data paths perform transmission in parallel, and each piece of test data is transmitted in parallel by the plurality of data paths. The third clock signal is used for the data link layer to generate the test data and for the data link layer to detect the test return data. For the way of transmitting the test data and the test return data between the data link layer and the physical layer, a reference may be made to the ways described in step S210 and step S220, which will not be repeated here. Optionally, the data transmission method further includes: determining, by the data link layer, whether the plurality of data segments are aligned according to the first clock signal or according to the third clock signal, and if not aligned, adjusting the way of acquiring the plurality of data segments, such that the plurality of data segments can be acquired simultaneously or synchronously. When a plurality of data segments are acquired according to the first clock signal or the third clock signal, if a plurality of data segments acquired through one same acquisition operation belong to the third data, the plurality of data segments are aligned. If a plurality of data segments acquired through one same acquisition operation do not all belong to the third data, the plurality of data segments are not aligned. For example, one piece of test return data corresponds to 16 data segments, then it is necessary to guarantee that 16 data segments acquired once all belong to the test return data rather than other data.

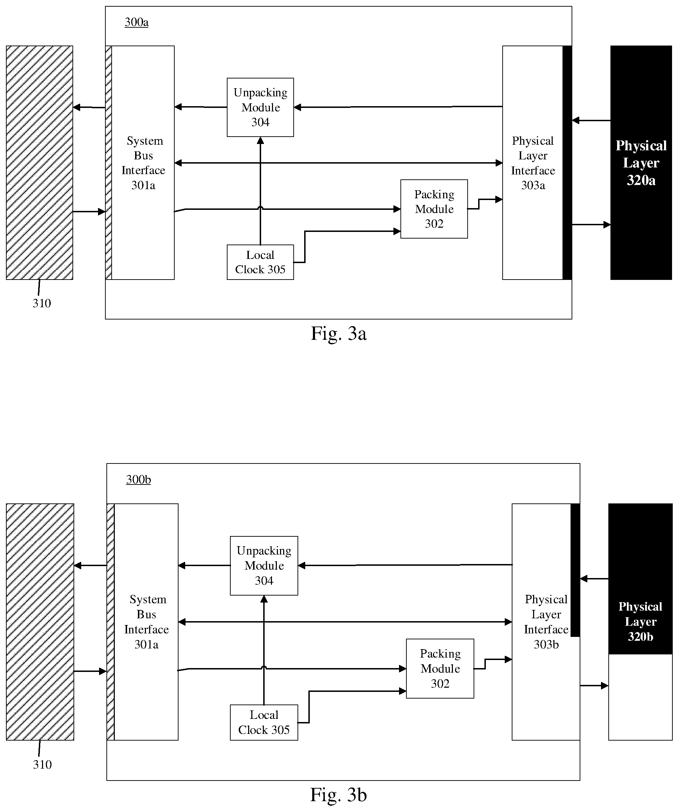

The present disclosure further provides a plurality of possible structures of the data link layer. The data link layer is described below with reference to Figs. 3a to 3d, Figs. 4a and 4b, and Fig. 5, to facilitate understanding.

Fig. 3a illustrates a structural schematic diagram of a data link layer provided according to at least one embodiment of the present disclosure.

In Fig. 3a, the data link layer 300a communicates with a system bus 310 and a physical layer 320a. The system bus 310 operates in a first clock domain, the physical layer 320a operates only in a second clock domain, and the data link layer 300a partly operates in a third clock domain. The first clock domain, the second clock domain, and the third clock domain are different. The first clock domain includes a first clock signal, the second clock domain includes a second clock signal, and the third clock domain includes a third clock signal. The first clock signal, the second clock signal, and the third clock signal are not synchronized with one another.

In this embodiment and the following embodiments, a box filled with slashes is used to represent operating in the first clock domain, and a box filled with black is used to represent operating in the second clock domain, and a box filled with white is used to represent operating in the third clock domain. If one box is filled with a variety of filling patterns, it represents operating in a plurality of corresponding clock domains.

The data link layer 300a includes a system bus interface 301a, a packing module 302, a physical layer interface 303a, an unpacking module 304, and a local clock 305. The system bus interface 301a is connected with the system bus 310 and the packing module 302. The physical layer interface 303a is connected with the packing module 302 and the physical layer 320a. The unpacking module 304 is connected with the physical layer interface 303a and the system bus interface 301a. The local clock 305 is connected with the system bus interface 301a, the packing module 302, the physical layer interface 303a, and the unpacking module 304.

In embodiments of the present disclosure, "connected" represents directly connected or indirectly connected. For example, the physical layer interface 303a is directly connected to the unpacking module 304, and the physical layer interface 303a may also be connected to the unpacking module 304 via other components.

The data link layer 300 realizes bidirectional data transmission between the system bus 310 and the physical layer 320a. In Fig. 3a, the packing module 302, the unpacking module 304, and the local clock 305 all operate in the third clock domain. One part of the system bus interface 301a operates in the first clock domain, and the other part thereof operates in the third clock domain. One part of the physical layer interface 303a operates in the second clock domain, and the other part thereof operates in the third clock domain.

The system bus interface 301a receives first data from the system bus 310. The first data is transmitted by the system bus 310 according to the first clock signal and is carried in a data signal which is synchronized with the first clock signal. For example, the system bus interface 301a asynchronously receives the first data according to the third clock signal and transmits the first data to the packing module 302.

The packing module 302 performs packing processing on the first data to acquire second data. A flitflow control unit (Flit, a kind of data block) may be used as a basic unit for any data transmission between the data link layer 300 and the physical layer 320. The packing module 302 performs the packing processing on the first data to acquire at least one Flit. When a length of the first data is less than a length of a payload of one Flit, the first data may be put into one Flit for transmission. For example, one Flit includes a header, a payload, and a tail, and the payload part includes the first data and padding. When the length of the first data is greater than the length of one Flit, the first data may be, for example, split into N Flits for transmission. The N Flits include a header Flit, a payload Flit, and a tail Flit. The header Flit is a first Flit among a plurality of Flits, and includes a header, a payload, and a tail. The payload Flit is an intermediate Flit. The payload Flit includes only the payload. The tail Flit is the N-th Flit, which includes the payload and the tail. N is greater than or equal to 3. The payload of the tail Flit may be composed of padding data. The tail of the Flit is used to complete correctness detection of the Flit data, which supports CRC or ECC check mechanism. For example, the tail of the Flit contains CRC or ECC check bits, and the bit width thereof is related to a bit width of the Flit data, e.g., 6-32 bits. Correspondingly, the second data includes at least one Flit.

The packing module 302 performs the packing processing according to the third clock signal. The packing module 302 may be implemented by a logic circuit. The packing module 302 transmits the second data to the physical layer interface 303a after acquiring the second data.

For example, the physical layer interface 303a asynchronously transmits the second data to the physical layer 320a according to the third clock signal.

The physical layer interface 303a further receives third data from the physical layer 320a. For example, the physical layer 320a transmits the third data to the physical layer interface 303a according to the second clock signal, and the physical layer interface 303a asynchronously receives the third data according to the third clock signal. The physical the physical layer interface 303a then provides the third data to the unpacking module 304 according to the third clock signal. For example, the physical layer interface 303a actively transmits the third data, or the unpacking module 304 acquires the third data from the physical layer interface 303a. For example, the physical layer interface 303a includes a memory that may store the third data, and the unpacking module 304 acquires the third data from the physical layer interface 303a.

The unpacking module 304 performs the unpacking processing on the third data according to the third clock signal to acquire fourth data. The unpacking processing is contrary to the packing processing, and disassembles the Flit to acquire the fourth data conforming to a data format of the protocol layer. The third data includes at least one Flit. The non-padding part of the payload of the Flit is extracted to constitute the fourth data. When there is only one Flit, the non-padding part of the payload of the one Flit is the fourth data. The unpacking module 304 transmits the fourth data to the system bus interface 301a. The system bus interface 301a asynchronously transmits the fourth data to the system bus 310 according to the third clock signal.

In some embodiments, the third data transmitted by the physical layer 320a may be parallel data. For example, the third data is composed of a plurality of data segments that are transmitted in parallel. For example, the physical layer 320a has 16 data channels. Thus, the third data includes 16 data segments. Correspondingly, the physical layer interface 303a receives 16 parallel data segments. The unpacking module 304 correspondingly performs the unpacking processing on these 16 data segments to acquire serial fourth data.

Fig. 3b illustrates a structural schematic diagram of another data link layer provided according to at least one embodiment of the present disclosure.

In Fig. 3b, the data link layer 300b communicates with a system bus 310 and a physical layer 320b. The system bus 310 operates in a first clock domain, the physical layer 320b operates in a second clock domain and a third clock domain, and the data link layer 300b partly operates in the third clock domain. The first clock domain, the second clock domain, and the third clock domain are different. The first clock domain includes a first clock signal, the second clock domain includes a second clock signal, and the third clock domain includes a third clock signal. The first clock signal, the second clock signal, and the third clock signal are not synchronized with one another.

The data link layer 300b includes a system bus interface 301a, a packing module 302, a physical layer interface 303b, an unpacking module 304, and a local clock 305. The system bus interface 301a is connected with the system bus 310 and the packing module 302. The physical layer interface 303b is connected with the packing module 302 and the physical layer 320b. The unpacking module 304 is connected with the physical layer interface 303b and the system bus interface 301a. The local clock 305 is connected with the system bus interface 301a, the packing module 302, the physical layer interface 303b, and the unpacking module 304.

The reference numerals of part of boxes in Fig. 3b are identical to those of boxes in Fig. 3a, representing same components, and a reference may be made to the related description of Fig. 3a, which will not be repeated here.

The differences in Fig. 3b are the physical layer interface 303b and the physical layer 320b. The packing module 302 transmits second data to the physical layer interface 303b according to the third clock signal, and then the physical layer interface 303b synchronously transmits the second data to the physical layer 320b according to the third clock signal. The physical layer interface 303b in this embodiment performs unvarnished transmission of the second data. Therefore, the packing module 302 may be considered as being directly connected to the physical layer 320b. Optionally, when the physical layer 320b operates in the second clock domain and the third clock domain, the packing module 302 may be directly connected to the physical layer 320b.

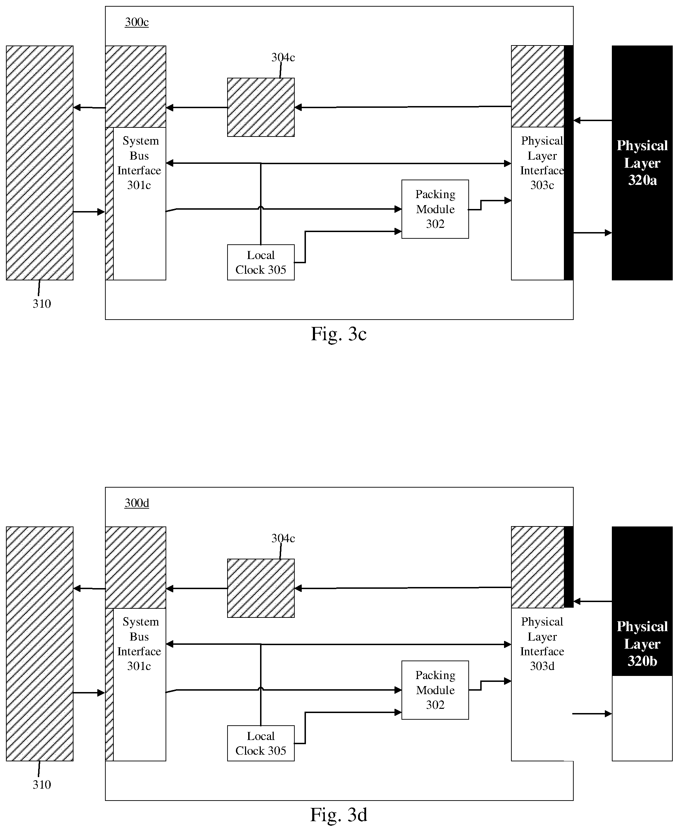

Fig. 3c illustrates a structural schematic diagram of a further another data link layer provided according to at least one embodiment of the present disclosure.

In Fig. 3c, the data link layer 300c communicates with a system bus 310 and a physical layer 320a. The system bus 310 operates in a first clock domain, the physical layer 320a operates only in the second clock domain, and the data link layer 300c partly operates in the third clock domain. The first clock domain, the second clock domain, and the third clock domain are different. The first clock domain includes a first clock signal, the second clock domain includes a second clock signal, and the third clock domain includes a third clock signal. The first clock signal, the second clock signal, and the third clock signal are not synchronized with one another.

The data link layer 300c includes a system bus interface 301c, a packing module 302, a physical layer interface 303c, an unpacking module 304c, and a local clock 305. The system bus interface 301c is connected with the system bus 310 and the packing module 302. The physical layer interface 303c is connected with the packing module 302 and the physical layer 320a. The unpacking module 304c is connected with the physical layer interface 303c and the system bus interface 301c. The local clock 305 is connected with the system bus interface 301c, the packing module 302, and the physical layer interface 303c.

The reference numerals of part of boxes in Fig. 3c are identical to those of boxes in Fig. 3a or Fig. 3b, representing same components, and a reference may be made to the related descriptions of Fig. 3a and Fig. 3b, which will not be repeated here.

The system bus interface 301c, the physical layer interface 303c, and the unpacking module 304c are different in Fig. 3c. The physical layer interface 303c asynchronously receives third data from the physical layer 320a according to the first clock signal. The unpacking module 304c acquires the third data from the physical layer interface 303c according to the first clock signal, and performs unpacking processing on the third data according to the first clock signal to acquire fourth data. The unpacking module 304c transmits the fourth data to the system bus interface 301c according to the first clock signal, and the system bus interface 301c synchronously transmits the fourth data to the system bus 310 according to the first clock signal. In this embodiment, the system bus interface 301c performs unvarnished transmission of the fourth data. Thus, the unpacking module 304c may be considered as being directly connected to the system bus 310. Optionally, when the unpacking module 304c operates according to the first clock signal, the unpacking module 304c may be directly connected to the system bus 310. Fig. 3d illustrates a structural schematic diagram of a still another data link layer provided according to at least one embodiment of the present disclosure.

In Fig. 3d, the data link layer 300d communicates with a system bus 310 and a physical layer 320b. The system bus 310 operates in a first clock domain, the physical layer 320b operates in a second clock domain and a third clock domain, and the data link layer 300d partly operates in the third clock domain. The first clock domain, the second clock domain, and the third clock domain are different. The first clock domain includes a first clock signal, the second clock domain includes a second clock signal, and the third clock domain includes a third clock signal. The first clock signal, the second clock signal, and the third clock signal are not synchronized with one another.

The data link layer 300d includes a system bus interface 301c, a packing module 302, a physical layer interface 303d, an unpacking module 304c, and a local clock 305. The system bus interface 301c is connected with the system bus 310 and the packing module 302. The physical layer interface 303d is connected with the packing module 302 and the physical layer 320b. The unpacking module 304c is connected with the physical layer interface 303d and the system bus interface 301c. The local clock 305 is connected with the system bus interface 301c, the packing module 302, and the physical layer interface 303d.

The reference numerals of part of boxes in Fig. 3d are identical to those of boxes in Fig. 3a, Fig. 3b, or Fig. 3c, representing same components, and a reference may be made to the related descriptions of Figs. 3a to 3c, which will not be repeated here.

Fig. 3d differs from Fig. 3c by the physical layer interface 303d and the physical layer 320b. The packing module 302 transmits second data to the physical layer interface 303d according to the third clock signal, and the physical layer interface 303d synchronously transmits the second data to the physical layer 320b according to the third clock signal.

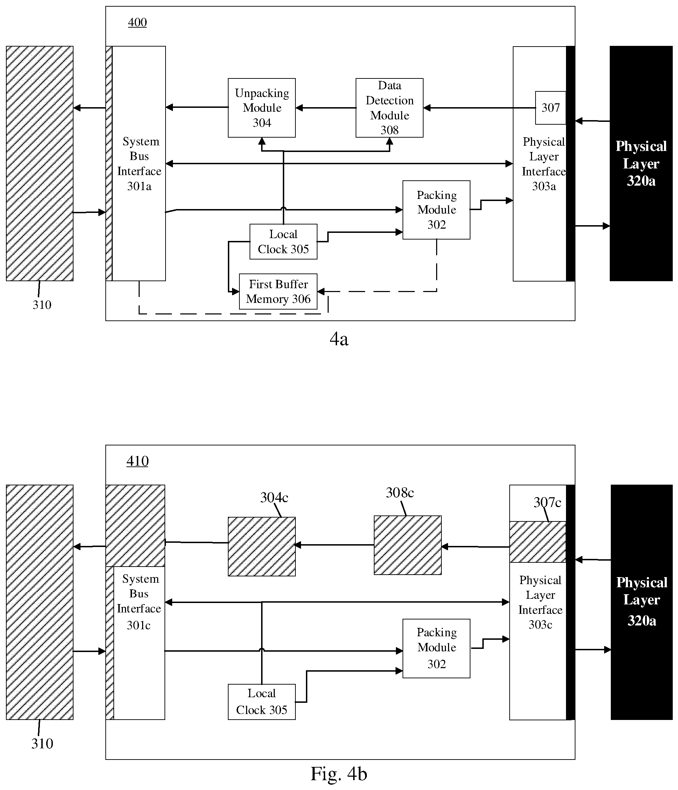

Fig. 4a illustrates another structural schematic diagram of a data link layer provided according to at least one embodiment of the present disclosure.

The data link layer 400 communicates with a system bus 310 and a physical layer 320a. The system bus 310 operates in a first clock domain, the physical layer 320a operates in the second clock domain, and the data link layer 400 partly operates in the third clock domain. The first clock domain and the second clock domain are both different from the third clock domain. The first clock domain includes a first clock signal, the second clock domain includes a second clock signal, and the third clock domain includes a third clock signal.

The data link layer 400 has some components added on the basis of the data link layer 300a. The data link layer 400 includes a system bus interface 301a, a packing module 302, a physical layer interface 303a, an unpacking module 304, a local clock 305, a first buffer memory 306, a second buffer memory 307, and a data detection module 308. The system bus interface 301a is connected with the system bus 310 and the packing module 302. The physical layer interface 303a is connected with the packing module 302 and the physical layer 320a. The unpacking module 304 is connected with the data detection module 308 and the system bus interface 301a. The local clock 305 is connected with the system bus interface 301a, the packing module 302, the physical layer interface 303a, the unpacking module 304, the first buffer memory 306, and the data detection module 308. The data detection module 308 is connected to the second buffer memory 307, and the second buffer memory 307 belongs to the physical layer interface 303a.

The slashed connection in Fig. 4a represents the connection of the first buffer memory 306 with the system bus interface 301a or the packing module 302.

For the descriptions of the system bus interface 301a, the packing module 302, the unpacking module 304, and the local clock 305, a reference may be made to the related description of Fig. 3a, which will not be described in detail here.

The first buffer memory 306 is configured to store first data for backup. In this embodiment, the first buffer memory 306 may be accessed according to the third clock signal. The first data may be stored to the first buffer memory 306 by the system bus interface 301a or the packing module 302. The first buffer memory 306 may be any memory, which will not be defined here. The first buffer memory 306 may further store second data. For example, the packing module 302 stores the second data to the first buffer memory 306 after acquiring the second data.

In this embodiment, the system bus interface 301a may be implemented with an asynchronous first input first output (FIFO) memory so that asynchronous data transmission can be realized. Optionally, the system bus interface 301a may also be implemented in a plurality of ways, such as using a multistage synchronizer and using a handshake protocol.

The physical layer interface 303a synchronously receives third data from the physical layer 320a according to the second clock signal, and the third data is transmitted by the physical layer 320a according to the second clock signal. In this embodiment, the physical layer interface 303a, after receiving the third data, stores the data to the second buffer memory 307. For example, the physical layer interface 303a writes the third data to the second buffer memory 307 according to the second clock signal. The second buffer memory 307 may be the asynchronous FIFO memory, e.g., an asynchronous elastic FIFO memory. A read pointer and a write point of the asynchronous elastic FIFO memory are in a following relationship. For example, the read pointer and the write pointer fixedly differ by a preset number of storage spaces. For example, the read pointer points to a second entry, and the write pointer points to a fourth entry. When the write pointer moves to a fifth entry, the read pointer will follow to move to a third entry and read data stored in the third entry. Optionally, the second buffer memory 307 may also be implemented using a multistage synchronizer or using a handshake protocol instead.

In this embodiment, an end of the second buffer memory 307 where data is written belongs to the second clock domain, and an end where data is read belongs to the third clock domain. Thus, after the third data is written to the second buffer memory 307 and read, the third data is completely converted from the second clock domain to the third clock domain.

Optionally, the physical layer interface 303a includes a data alignment module. The data alignment module is connected between the second buffer memory 307 and the physical layer 320a. The data alignment module operates in the second clock domain. The data alignment module is configured to locate a location of the third data in a data signal or find the third data from the data signal. For example, the data alignment module determines a starting location of the third data according to header information or an identifier to acquire the third data. The data alignment module synchronously receives the third data from the physical layer 320a according to the second clock signal.

In some embodiments, when parallel data is transmitted between chiplets, data belonging to one command or one operation will be divided into a plurality of data segments that are transmitted in parallel by the physical layer. For example, the physical layer has 16 data channels, and the third data might be divided into 16 data segments that are transmitted in 16 data channels, respectively. Therefore, the third data transmitted from the physical layer 320a may include a plurality of data segments.

Optionally, before receiving the third data, the physical layer interface 303a may further determine data segments of the third data from a data signal transmitted by the physical layer 320a according to the second clock signal, wherein the third data is composed of a plurality of data segments. The physical layer interface 303a acquires a plurality of data segments according to the second clock signal and stores the plurality of data segments to the second buffer memory 307 according to the second clock signal.

For example, the physical layer interface 303a includes a plurality of data alignment modules. The plurality of data segments are transmitted in parallel to the plurality of data alignment modules by the physical layer 320a. Each of the plurality of data alignment modules transmits one of the plurality of data segments to the second buffer memory. For example, when there are a plurality of second buffer memories, the plurality of data segments are correspondingly transmitted to the plurality of second buffer memories one by one. Alternatively, when there is only one second buffer memory, the plurality of data segments are transmitted into different storage areas of the same second buffer memory. Each storage area includes a plurality of storage spaces, and each storage space may store one data segment.

The data detection module 308 accesses the second buffer memory 307 according to the third clock signal. The data detection module 308 detects data segments in the second buffer memory 307. When a plurality of data segments constituting the third data are detected, the plurality of data segments are transmitted to the unpacking module 304, and when the plurality of data segments constituting the third data are not detected, the second buffer memory 307 is adjusted to acquire the plurality of data segments. For example, a relative relationship of a read pointer and a write pointer of the second buffer memory 307 is adjusted, a value of the read pointer is adjusted separately, or a value of the write pointer is adjusted separately. Optionally, the adjustment function may be implemented by a separate module, such as an adjustment module. The data detection module 308 only detects whether the plurality of data segments acquired at this time are the plurality of data segments constituting the third data. When a detection result is no, an instruction is transmitted to the adjustment module such that the adjustment module adjusts the second buffer memory. Further optionally, the detection function of the data detection module 308 is only used at a data link training stage. After the training of a data link is completed, the data detection module 308 performs the unvarnished transmission operation to transmit the third data and the plurality of data segments constituting the third data to the unpacking module 304.

Optionally, the data link layer may further include a loopback test module. The loopback test module is connected with the physical layer interface and the packing module and configured to perform a loopback test on a plurality of data paths corresponding to the data link layer according to the third clock signal, wherein the plurality of data paths are connected to the data link layer via the physical layer. For example, the loopback test module includes a loopback test generator connected with the packing module and a loopback test checker connected with the physical layer interface. The loopback test generator is configured to generate at least one piece of test data according to a preset loopback test data pattern, and provide the at least one piece of test data to the physical layer via the packing module and the physical layer interface according to the third clock signal for transmitting to the plurality of data paths. The loopback test checker is configured to: receive at least one piece of test return data from the physical layer via the physical layer interface according to the third clock signal, the at least one piece of test return data being in one-to-one correspondence with the at least one piece of test data; and detect the at least one piece of test return data according to the loopback test data pattern to complete the loopback test. For example, the loopback test generator is connected to the local clock 305 and the packing module 302. The loopback test checker is connected to the local clock 305 and the second buffer memory 307.

The first buffer memory 306 in Fig. 4a may be further applied to the data link layer of Figs. 3a to 3d. For example, the implementation manners of the unpacking module 304, the data detection module 308, and the second buffer memory 307 in Fig. 4a may also be adaptively applied to the data link layer of Figs. 3a to 3d.

Fig. 4b illustrates still another structural schematic diagram of a data link layer provided according to at least one embodiment of the present disclosure.

The implementation manners of the unpacking module 304, the data detection module 308, and the second buffer memory 307 may also be adaptively applied to the data link layer of Fig. 3c to acquire the structure of Fig. 4b.

In Fig. 4b, the data link layer 410 includes a system bus interface 301c, a packing module 302, a physical layer interface 303c, an unpacking module 304c, a second buffer memory 307c, and a data detection module 308c. The unpacking module 304c, the second buffer memory 307c, and the data detection module 308c differ from the unpacking module 304, the second buffer memory 307, and the data detection module 308 in Fig. 4a by operating in the first clock domain, i.e., operating using the first clock signal rather than using the third clock signal. For the descriptions of other modules or components of the data link layer 410, a reference may be made to Figs. 3c and 4a, which will not be repeated here.

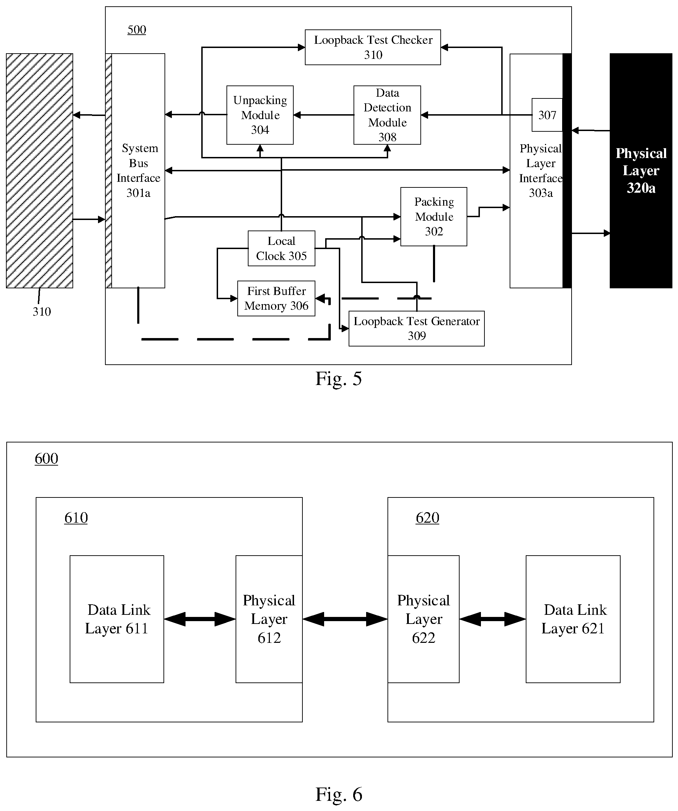

Fig. 5 illustrates another structural schematic diagram of a data link layer provided according to at least one embodiment of the present disclosure.

The data link layer 500 communicates with the system bus 310 and the physical layer 320a. The data link layer 500 is similar to the data link layer 400 except that the data link layer 500 includes a loopback test generator 309 and a loopback test checker 310.

The loopback test generator 309 is connected with the local clock 305 and the packing module 302. The loopback test checker 310 is connected to the physical layer interface 303a or directly connected to the second buffer memory 307. The loopback test checker 310 is also connected with the local clock 305. The loopback test generator 309 and the loopback test checker 310 both operate in the third clock domain.

The loopback test generator 309 and the loopback test checker 310 may operate at a test stage before a chiplet leaves factory. The loopback test generator 309 and the loopback test checker 310 cooperatively checks whether a plurality of data links of the chiplet have problems. For example, the loopback test generator 309 generates test data, and a format of the test data is the same as the first data. The packing module 302 performs the packing processing on the test data, and provides the processed test data to the physical layer 320a. The physical layer 320a will transmit the test data after the packing to a plurality of data paths and thus transmitted to a test device. The test device feeds back with respect to the test data. The physical layer 320a receives test return data through a plurality of data paths. The test return data reaches the loopback test checker 310 after passing through the physical layer interface 303a. The loopback test checker 310 performs detection with respect to the test return data to determine whether a data link has a problem and the data link corresponding to the problem. In normal operation, the loopback test generator 309 and the loopback test checker 310 are in a deactivated state.

In this embodiment, the loopback test checker 310 and the data detection module 308 may both access the second buffer memory 307. The second buffer memory 307 has some differences from other modules, and whether the second buffer memory 307 operates in the first clock domain or the third clock domain depends on a clock signal used when it is accessed. Because the data read of the second buffer memory 307 is realized by accessing the read pointer, and the "access" operation depends on an edge of a clock signal. Thus, both the first clock signal and the third clock signal can be used for access. Therefore, the clock domain in which the second buffer memory 307 operates is not fixed.

Optionally, at least one embodiment of the present disclosure further provides a chiplet interconnection interface configured to perform the data transmission method as described in any one of the above method embodiments.

Optionally, at least one embodiment of the present disclosure further provides a chiplet interconnection interface, including the data link layer as described in the above apparatus embodiments.

Fig. 6 illustrates a schematic diagram of a chip provided by at least one embodiment of the present disclosure.

In Fig. 6, the chip 600 includes a chiplet 610 and a chiplet 620. The chiplet 610 includes a data link layer 611 and a physical layer 612, and the chiplet 620 includes a data link layer 621 and a physical layer 622. The physical layer 612 is connected to the physical layer 622 such that interconnection of the chiplet 620 and the chiplet 610 is realized.

At least one embodiment of the present disclosure provides an electronic device, including the chip as described in the above embodiment.

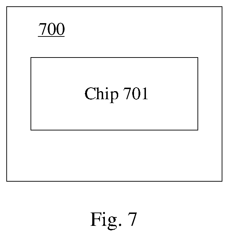

Fig. 7 illustrates a schematic diagram of an electronic device provided by at least one embodiment of the present disclosure.

The electronic device 700 includes a chip 701. The chip 701 is, for example, the chip 600 shown in Fig. 6. The electronic device 700 may be any device having a computing function, such as a computer, a server, a smart phone, and a tablet computer, which will not be limited in the embodiments of the present disclosure.

The basic principles of the present disclosure are described above in conjunction with specific examples. However, it should be pointed out that the advantages, properties, and effects and the like mentioned in the present disclosure are only examples and not limitations. It cannot be considered that these advantages, properties, and effects and the like are necessary for each example of the present disclosure. In addition, the specific details disclosed above are only for illustration and explanation, rather than limitation, and the above details do not limit the present disclosure to be achieved by the above specific details.

It needs to be noted that the step flowcharts in the present disclosure and the above method descriptions only serve as exemplary examples and are not intended to require or imply that the steps of the embodiments must be performed in the given order, and certain steps may be performed in parallel, independently of one another, or according to other suitable orders. In addition, words such as "followed by", "then", and "next" are not intended to limit the order of the steps. These words are merely used to guide readers to read through the descriptions of these methods.

The blocks diagrams of the components, apparatuses, devices and systems involved in the present disclosure are merely exemplary and not intended to require or imply that connection, arrangement or configuration must be made as shown in the block diagrams. It also needs to be noted that the components or the steps in the apparatuses and methods of the present disclosure may be decomposed or recombined. Such decompositions and/or recombinations shall all be considered as equivalent solutions of the present disclosure.

The following points need to be noted: (1) The accompanying drawings in the embodiments of the present disclosure only involve structures involved in the embodiments of the present disclosure, and other structures may be designed as usual. (2) The embodiments of the present disclosure and the features in the embodiments can be combined with one another to derive new embodiments without conflict. The foregoing are merely descriptions of the exemplary embodiments of the present disclosure and are not meant to limit the protection scope of the present disclosure. The protection scope of the present disclosure is defined by the appended claims.

## Claims

1. A data transmission method, applied to a data link layer of a chiplet interconnection interface, wherein the data link layer communicates with a system bus and a physical layer, the system bus operates in a first clock domain, the physical layer operates in a second clock domain or operates in both the second clock domain and a third clock domain, and the method comprises:
performing, by the data link layer, packing processing on first data received from the system bus to acquire second data and providing the second data to the physical layer, or performing, by the data link layer, unpacking processing on third data received from the physical layer to acquire fourth data, and providing the fourth data to the system bus,
wherein the data link layer partly operates in the third clock domain, the first clock domain and the second clock domain are both different from the third clock domain, the first clock domain comprises a first clock signal, the second clock domain comprises a second clock signal, and the third clock domain comprises a third clock signal.

2. The method according to claim 1, wherein before performing, by the data link layer, the packing processing on the first data received from the system bus to acquire the second data, the method further comprises:
asynchronously receiving, by the data link layer, the first data from the system bus according to the third clock signal, wherein the first data is transmitted by the system bus according to the first clock signal.

3. The method according to claim 1, wherein before performing, by the data link layer, the unpacking processing on the third data received from the physical layer to acquire the fourth data, the method further comprises:
acquiring, by the data link layer, the third data from the physical layer according to the third clock signal; or
acquiring, by the data link layer, the third data from the physical layer according to the first clock signal in response to the data link layer further partly operating in the first clock domain; or
acquiring, by the data link layer, the third data from the physical layer according to the second clock signal in response to the data link layer further partly operating in the second clock domain,
wherein the third data is transmitted by the physical layer according to the second clock signal.

4. The method according to any one of claims 1 to 3, wherein performing, by the data link layer, the packing processing on the first data received from the system bus to acquire the second data comprises:
performing, by the data link layer, the packing processing on the first data according to the third clock signal to acquire the second data.

5. The method according to any one of claims 1 to 4, wherein providing the second data to the physical layer comprises:
synchronously or asynchronously providing, by the data link layer, the second data to the physical layer according to the third clock signal.

6. The method according to claim 3, wherein performing, by the data link layer, the unpacking processing on the third data received from the physical layer to acquire the fourth data comprises:
when the data link layer acquires the third data according to the first clock signal, performing, by the data link layer, the unpacking processing on the third data according to the first clock signal to acquire the fourth data; and
when the data link layer acquires the third data according to the third clock signal, performing, by the data link layer, the unpacking processing on the third data according to the third clock signal to acquire the fourth data.

7. The method according to claim 3, wherein acquiring, by the data link layer, the third data from the physical layer according to the third clock signal comprises: asynchronously receiving, by the data link layer, the third data from the physical layer according to the third clock signal; or
acquiring, by the data link layer, the third data from the physical layer according to the first clock signal comprises: asynchronously receiving, by the data link layer, the third data from the physical layer according to the first clock signal; or
acquiring, by the data link layer, the third data from the physical layer according to the second clock signal comprises: synchronously receiving, by the data link layer, the third data from the physical layer according to the second clock signal.

8. The method according to claim 7, wherein receiving, by the data link layer, the third data from the physical layer according to the second clock signal comprises:
determining and receiving, by the data link layer, a plurality of data segments of the third data from a data signal transmitted by the physical layer according to the second clock signal, wherein the third data consists of the plurality of data segments.

9. The method according to claim 8, wherein before receiving the plurality of data segments, the method further comprises:
asynchronously acquiring, by the data link layer, the plurality of data segments according to the first clock signal, or asynchronously acquiring, by the data link layer, the plurality of data segments according to the third clock signal, to enable the third data to enter the first clock domain or the third clock domain.

10. The method according to claim 7, wherein asynchronously receiving, by the data link layer, the third data from the physical layer according to the first clock signal comprises: asynchronously receiving, by the data link layer, a plurality of data segments of the third data according to the first clock signal; or
asynchronously receiving, by the data link layer, the third data from the physical layer according to the third clock signal comprises: asynchronously receiving, by the data link layer, a plurality of data segments of the third data according to the third clock signal;
wherein the third data consists of the plurality of data segments.

11. The method according to any one of claims 1 to 10, wherein providing the fourth data to the system bus comprises:
synchronously providing, by the data link layer, the fourth data to the system bus according to the first clock signal; or
asynchronously providing, by the data link layer, the fourth data to the system bus according to the third clock signal.

12. The method according to any one of claims 1 to 11, further comprising:
performing, by the data link layer, a loopback test on a plurality of data paths corresponding to the data link layer according to the third clock signal, wherein the plurality of data paths are connected to the data link layer via the physical layer.

13. The method according to claim 12, wherein performing, by the data link layer, the loopback test on the plurality of data paths corresponding to the data link layer according to the third clock signal comprises:
generating, by the data link layer, at least one piece of test data according to a preset loopback test data pattern;
synchronously or asynchronously transmitting, by the data link layer, the at least one piece of test data to the physical layer according to the third clock signal for transmitting to the plurality of data paths;
acquiring, by the data link layer, at least one piece of test return data from the physical layer according to the first clock signal, the second clock signal, or the third clock signal, wherein the at least one piece of test return data corresponds to the at least one piece of test data one by one; and
detecting, by the data link layer, the at least one piece of test return data according to the loopback test data pattern to complete the loopback test.

14. A data link layer, applied to a chip interconnection interface, wherein the data link layer communicates with a system bus and a physical layer, the system bus operates in a first clock domain, the physical layer operates in a second clock domain or operates in both the second clock domain and a third clock domain, the data link layer partly operates in the third clock domain, and the data link layer comprises:
a system bus interface connected with the system bus and configured to receive first data from the system bus;
a packing module connected with the system bus interface and configured to perform packing processing on the first data to acquire second data;
a physical layer interface connected with the packing module and the physical layer, and configured to provide the second data to the physical layer and acquire third data from the physical layer;
an unpacking module connected with the physical layer interface and configured to perform unpacking processing on the third data to acquire fourth data, wherein the fourth data is provided by the unpacking module or by the system bus interface to the system bus; and
a local clock connected with the system bus interface, the packing module, the unpacking module, and the physical layer interface, and configured to generate a third clock signal comprised in the third clock domain;
wherein the first clock domain and the second clock domain are both different from the third clock domain, the first clock domain comprises a first clock signal, and the second clock domain comprises a second clock signal.

15. The data link layer according to claim 14, wherein the system bus interface is configured to asynchronously receive the first data from the system bus according to the third clock signal, wherein the first data is transmitted by the system bus according to the first clock signal.

16. The data link layer according to claim 14 or 15, wherein the physical layer interface is further configured to acquire the third data from the physical layer according to the third clock signal; or
the physical layer interface is further configured to acquire the third data from the physical layer according to the first clock signal in response to the data link layer further partly operating in the first clock domain; or
the physical layer interface is further configured to acquire the third data from the physical layer according to the second clock signal in response to the data link layer further partly operating in the second clock domain;
wherein the third data is transmitted by the physical layer according to the second clock signal.

17. The data link layer according to any one of claims 14 to 16, wherein the packing module is configured to perform the packing processing on the first data according to the third clock signal to acquire the second data.

18. The data link layer according to any one of claims 14 to 17, wherein the physical layer interface is configured to synchronously or asynchronously provide the second data to the physical layer according to the third clock signal.

19. The data link layer according to claim 16, wherein the unpacking module is configured to: when the third data is acquired according to the first clock signal, perform the unpacking processing on the third data according to the first clock signal to acquire the fourth data; and when the third data is acquired according to the third clock signal, perform the unpacking processing on the third data according to the third clock signal to acquire the fourth data.

20. The data link layer according to claim 16, wherein the physical layer interface is configured to: asynchronously receive the third data from the physical layer according to the first clock signal; or asynchronously receive the third data from the physical layer according to the third clock signal; or synchronously receive the third data from the physical layer according to the second clock signal.

21. The data link layer according to claim 20, wherein the physical layer interface is further configured to: determine and receive a plurality of data segments of the third data from a data signal transmitted by the physical layer according to the second clock signal, wherein the third data consists of the plurality of data segments.

22. The data link layer according to claim 21, wherein the physical layer interface is further configured to: after receiving the plurality of data segments, asynchronously acquire the plurality of data segments according to the first clock signal, or asynchronously acquire the plurality of data segments according to the third clock signal, to enable the third data to enter the first clock domain or the third clock domain.

23. The data link layer according to claim 20, wherein the physical layer interface is configured to: asynchronously receive a plurality of data segments of the third data according to the first clock signal, or asynchronously receive a plurality of data segments of the third data according to the third clock signal, wherein the third data consists of the plurality of data segments.

24. The data link layer according to any one of claims 14 to 23, wherein the unpacking module or the system bus interface is further configured to:
synchronously provide the fourth data to the system bus according to the first clock signal; or
asynchronously provide the fourth data to the system bus according to the third clock signal.

25. The data link layer according to any one of claims 14 to 24, further comprising a first buffer memory connected with the system bus interface or the packing module and configured to store the first data according to the third clock signal.

26. The data link layer according to any one of claims 14 to 25, wherein the data link layer further partly operates in the first clock domain and the second clock domain, or the data link layer further partly operates in the second clock domain; and
the physical layer interface comprises a second buffer memory connected with the physical layer and the unpacking module, and configured to perform a write operation according to the second clock signal and perform a read operation according to the first clock signal or the third clock signal, wherein the second buffer memory stores the third data in the form of data segments.

27. The data link layer according to claim 26, further comprising:
a data detection module, connected with the unpacking module and the second buffer memory, and configured to: detect data segments in the second buffer memory; when a plurality of data segments constituting the third data are detected, transmit the plurality of data segments to the unpacking module; and when the plurality of data segments constituting the third data are not detected, adjust the second buffer memory to obtain the plurality of data segments.

28. The data link layer according to any one of claims 14 to 25, further comprising:
a loopback test module, connected with the physical layer interface and the packing module, and configured to perform a loopback test on a plurality of data paths corresponding to the data link layer according to the third clock signal, wherein the plurality of data paths are connected to the data link layer via the physical layer.

29. The data link layer according to claim 28, wherein the loopback test module comprises a loopback test generator connected with the packing module, and a loopback test checker connected with the physical layer interface;
the loopback test generator is configured to generate at least one piece of test data according to a preset loopback test data pattern, and provide the at least one piece of test data to the physical layer via the packing module and the physical layer interface according to the third clock signal, for transmitting to the plurality of data paths; and
the loopback test checker is configured to: receive at least one piece of test return data from the physical layer via the physical layer interface according to the third clock signal, the at least one piece of test return data corresponds to the at least one piece of test data one by one; and detect the at least one piece of test return data according to the loopback test data pattern to complete the loopback test.

30. The data link layer according to any one of claims 14 to 29, wherein the system bus interface is implemented with an asynchronous first input first output (FIFO) memory.

31. The data link layer according to claim 26, wherein the second buffer memory is an asynchronous elastic FIFO memory.

32. A chiplet interconnection interface, comprising the data link layer according to any one of claims 14 to 31.

33. A chip, comprising a plurality of chiplets, wherein any two chiplets of the plurality of chiplets are connected through the chiplet interconnection interface according to claim 32.

34. An electronic device, comprising the chip according to claim 33.
